# EUROPEAN PATENT SPECIFICATION

(11) **EP 3 640 190 B1**
(45) Date of publication and mention of the grant of the patent: **23.02.2022**
(21) Application number: 19204437.8
(22) Date of filing: 21.10.2019
(51) Int. Cl.: B66B 7/12

(54) **ELEVATOR SYSTEM TENSION MEMBER SURFACE ANOMOLY DETECTION**
NACHWEIS VON OBERFLÄCHENANOMALIEN AUF ZUGGLIEDER EINES AUFZUGSSYSTEMS
DÉTECTION D'ANOMALIES DE SURFACE D'UN ÉLÉMENT DE TENSION DE SYSTÈME D'ASCENSEUR

(30) Priority: 19.10.2018 US 201816165460
(43) Date of publication of application: 22.04.2020
(73) Proprietor: Otis Elevator Company, Farmington, Connecticut 06032 (US)
(72) Inventor: Wei, Wei, Farmington, CT Connecticut 06032 (US)
(74) Representative: Dehns

(56) References cited:
- CN-A- 105 755 879
- JP-A- 2004 075 221
- JP-A- 2017 105 557

## Description

### BACKGROUND

Exemplary embodiments pertain to the art of elevator systems. More particularly, the present disclosure relates to health monitoring of tension members of elevator systems, for example, of coated belts or ropes.

Elevator systems utilize one or more tension members operably connected to an elevator car and a counterweight in combination with, for example, a machine and traction sheave, to suspend and drive the elevator car along a hoistway. In some systems, the tension member is a belt having one or more tension elements retained in a jacket. The tension elements may be formed from, for example, steel wires or other materials, such as a carbon fiber composite. The tension elements support the load and the jacket holds the tension elements and transfers shear forces to the traction sheave.

Degradation of the jacket due to, for example, excessive wear, cracks, foreign object damage, and other abnormalities, reduces performance of the tension member and the elevator system, and may require the tension member to be repaired and/or replaced. Currently, evaluation of the jacket is performed by manual inspection performed by service personnel, at intervals of about one year, which is very labor intensive and may also be inaccurate due to limited access to the tension member in the hoistway.

JP 2004/075221 discloses a system for continuous monitoring of the deterioration processes of a rope for an elevator system.

### BRIEF DESCRIPTION

In one embodiment, a health monitoring system for a tension member of an elevator system includes one or more light emitters configured to direct a light signal toward an elevator system tension member and one or more light receivers configured to receive a reflected light signal from a fluorescent surface of the elevator system tension member. A discontinuity in the reflected light signal received at the one or more light receivers is indicative of an anomaly in the elevator tension member.

In some embodiments the one or more light emitters are positioned at one or more sheaves of the elevator system.

In some embodiments the one or more sheaves is a traction sheave of the elevator system.

In some embodiments the anomaly is one or more of one or more of cracks, pitting, excessive wear or foreign object damage.

In some embodiments the one or more light receivers are configured to transmit an alert to an elevator control system when an anomaly in the elevator tension member is detected.

In some embodiments the elevator control system is configured to take one or more actions in response to the alert.

In some embodiments the elevator control system stops operation of the elevator system or notifies a technician to perform an inspection of the elevator tension member in response to the alert.

In another embodiment, an elevator system includes a hoistway, an elevator car movable along the hoistway, a tension member operably connected to the elevator car to move the elevator car along the hoistway, and a health monitoring system for the tension member. The health monitoring system includes one or more light emitters configured to direct a light signal toward the elevator system tension member, and one or more light receivers configured to receive a reflected light signal from a fluorescent surface of the elevator system tension member. A discontinuity in the reflected light signal received at the one or more light receivers is indicative of an anomaly in the elevator tension member.

In some embodiments the fluorescent surface is a layer of fluorescent paint applied to a jacket of the elevator tension member.

In some embodiments the one or more light emitters are positioned at one or more sheaves of the elevator system.

In some embodiments the one or more sheaves is a traction sheave of the elevator system.

In some embodiments the anomaly is one or more of one or more of cracks, pitting, excessive wear or foreign object damage.

In some embodiments the one or more light receivers are configured to transmit an alert to an elevator control system when an anomaly in the elevator tension member is detected.

In some embodiments the elevator control system is configured to take one or more actions in response to the alert.

In some embodiments the elevator control system stops operation of the elevator system or notifies a technician to perform an inspection of the elevator tension member in response to the alert.

In yet another embodiment, a method of health monitoring of a tension member of an elevator system includes transmitting a light signal toward a fluorescent surface of an elevator tension member from a light emitter and reflecting the light signal from the fluorescent surface toward a light receiver. A discontinuity in the reflected light signal received at the light receiver is indicative of an anomaly in the elevator tension member.

In some embodiments the anomaly is one or more of one or more of cracks, pitting, excessive wear or foreign object damage.

In some embodiments an alert is transmitted from the light receiver to an elevator control system when an anomaly in the elevator tension member is detected.

In some embodiments the elevator control system stops operation of the elevator system or notifies a technician to perform an inspection of the elevator tension member in response to the alert.

In some embodiments the fluorescent surface is a layer of fluorescent paint applied to a jacket of the elevator tension member.

### BRIEF DESCRIPTION OF THE DRAWINGS

The following descriptions should not be considered limiting in any way. With reference to the accompanying drawings, like elements are numbered alike:
FIG. 1 is a schematic illustration of an elevator system;
FIG. 2 is a cross-sectional view of an embodiment of an elevator system tension member;
FIG. 3A is a cross-sectional view of an embodiment of a tension element for an elevator tension member;
FIG. 3B is a cross-sectional view of another embodiment of a tension element for an elevator tension member;
FIG. 4 is a schematic illustration of a health monitoring system of a tension member of an elevator system;
FIG. 5 is a plan view of an embodiment of an elevator system tension member; and
FIG. 6 is a schematic illustration of an embodiment of a method of health monitoring of an elevator system tension member.

### DETAILED DESCRIPTION

A detailed description of one or more embodiments of the disclosed apparatus and method are presented herein by way of exemplification and not limitation with reference to the Figures.

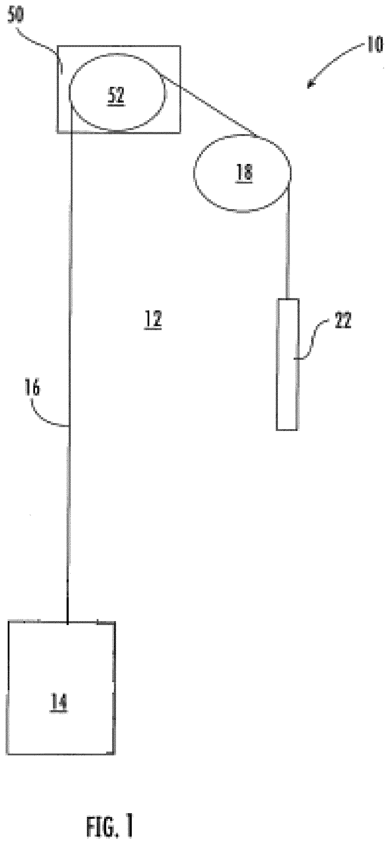

Shown in FIG. 1 is a schematic view of an exemplary traction elevator system 10. Features of the elevator system 10 that are not required for an understanding of the present invention (such as the guide rails, safeties, *etc*.) are not discussed herein. The elevator system 10 includes an elevator car 14 operatively suspended and/or propelled in a hoistway 12 with one or more tension members, for example belts 16. While in the following description, belts 16 are the tension members utilized in the elevator system, one skilled in the art will readily appreciate that the present disclosure may be utilized with other tension members, such as ropes or braided tapes. The one or more belts 16 interact with sheaves 18 and 52 to be routed around various components of the elevator system 10. Sheave 18 is configured as a diverter, deflector or idler sheave and sheave 52 is configured as a traction sheave, driven by a machine 50. Movement of the traction sheave 52 by the machine 50 drives, moves and/or propels (through traction) the one or more belts 16 that are routed around the traction sheave 52. Diverter, deflector or idler sheaves 18 are not driven by a machine 50, but help guide the one or more belts 16 around the various components of the elevator system 10. The one or more belts 16 could also be connected to a counterweight 22, which is used to help balance the elevator system 10 and reduce the difference in belt tension on both sides of the traction sheave during operation. The sheaves 18 and 52 each have a diameter, which may be the same or different from each other.

In some embodiments, the elevator system 10 could use two or more belts 16 for suspending and/or driving the elevator car 14. In addition, the elevator system 10 could have various configurations such that either both sides of the one or more belts 16 engage the sheaves 18, 52 or only one side of the one or more belts 16 engages the sheaves 18, 52. The embodiment of FIG 1 shows a 1:1 roping arrangement in which the one or more belts 16 terminate at the elevator car 14 and counterweight 22, while other embodiments may utilize other roping arrangements.

The belts 16 are constructed to meet belt life requirements and have smooth operation, while being sufficiently strong to be capable of meeting strength requirements for suspending and/or driving the elevator car 14 and counterweight 22.

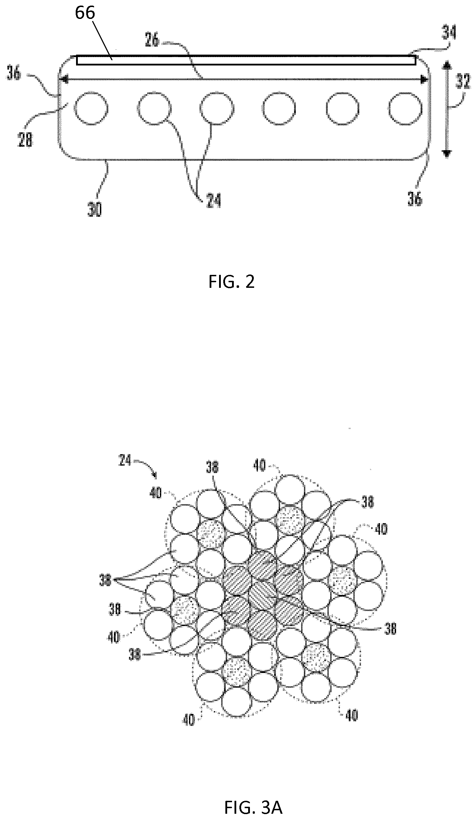

FIG. 2 provides a cross-sectional schematic of an exemplary belt 16 construction or design. The belt 16 includes a plurality of tension elements 24 extending longitudinally along the belt 16 and arranged across a belt width 26. The tension elements 24 are at least partially enclosed in a jacket 28 to restrain movement of the tension elements 24 in the belt 16 with respect to each other and to protect the tension elements 24. The jacket 28 defines a traction side 30 configured to interact with a corresponding surface of the traction sheave 52. A primary function of the jacket 28 is to provide a sufficient coefficient of friction between the belt 16 and the traction sheave 52 to produce a desired amount of traction there between. The jacket 28 should also transmit the traction loads to the tension elements 24. In addition, the jacket 28 should be wear resistant, fatigue resistant and protect the tension elements 24 from impact damage, exposure to environmental factors, such as chemicals, for example.

Exemplary materials for the jacket 28 include the elastomers of thermoplastic and thermosetting polyurethanes, thermoplastic polyester elastomers, ethylene propylene diene elastomer, chloroprene, chlorosulfonyl polyethylene, ethylene vinyl acetate, polyamide, polypropylene, butyl rubber, acrylonitrile butadiene rubber, styrene butadiene rubber, acrylic elastomer, fluoroelastomer, silicone elastomer, polyolefin elastomer, styrene block and diene elastomer, natural rubber, or combinations thereof. Other materials may be used to form the jacket material 28 if they are adequate to meet the required functions of the belt 16.

The belt 16 has a belt width 26 and a belt thickness 32, with an aspect ratio of belt width 26 to belt thickness 32 greater than one. The belt 16 further includes a back side 34 opposite the traction side 30 and belt edges 36 extending between the traction side 30 and the back side 34. While six tension elements 24 are illustrated in the embodiment of FIG. 2, other embodiments may include other numbers of tension elements 24, for example, 4, 10 or 12 tension elements 24. Further, while the tension elements 24 of the embodiment of FIG. 2 are substantially identical, in other embodiments, the tension elements 24 may differ from one another. While a belt 16 with a rectangular cross-section is illustrated in FIG. 2, it is to be appreciated that belts 16 having other cross-sectional shapes are contemplated within the scope of the present disclosure.

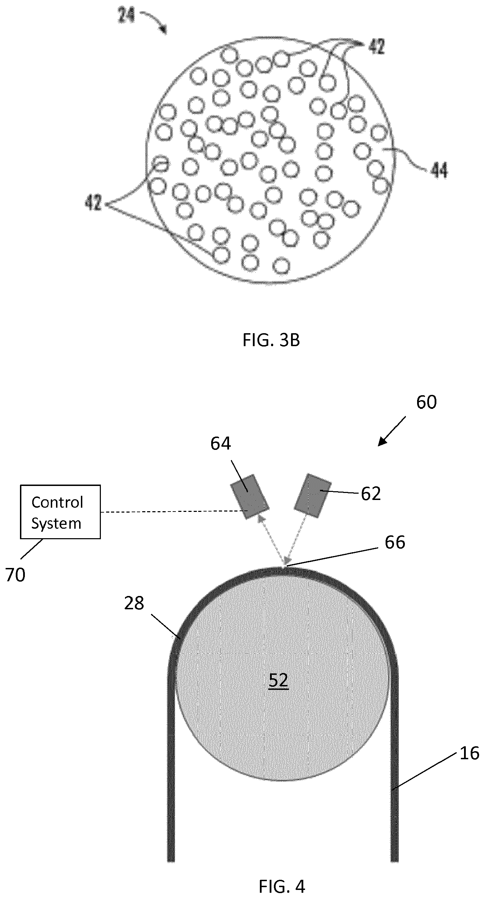

Referring now to FIG. 3A, the tension element 24 may be a plurality of wires 38, for example, steel wires 38, which in some embodiments are formed into one or more strands 40. In other embodiments, such as shown in FIG. 3B, the tension element 24 may include a plurality of fibers 42, such as carbon fiber, glass fiber aramid fiber, or their combination, disposed in a matrix material 44. Materials such as polyurethane, vinylester, or epoxy may be utilized as the matrix material, as well as other thermoset materials and, for example, thermoset polyurethane materials. While a circular cross-sectional tension element geometry is illustrated in the embodiment of FIG 3B, other embodiments may include different tension element cross-sectional geometries, such as rectangular or ellipsoidal. While the cross-sectional geometries of the tension elements 24 in FIG. 2 are shown as identical, in other embodiment the tension elements' cross-sectional geometries may differ from one another. Further, while the present disclosure is described in the context of a belt 16, one skilled in the art will readily appreciate that the disclosure may be readily applied to elevator systems 10 utilizing other types of tension members, for example a coated rope. Further, the present disclosure may be utilized with not only a tension member, but also a compensation member.

Referring to FIG. 4, the elevator system 10 includes a health monitoring system 60. The health monitoring system 60 includes a one or more light emitters 62 and one or more light receivers 64. The light emitters 62 and light receivers 64 are positioned in the hoistway 12 at, for example, the traction sheave 52 of the elevator system 10.

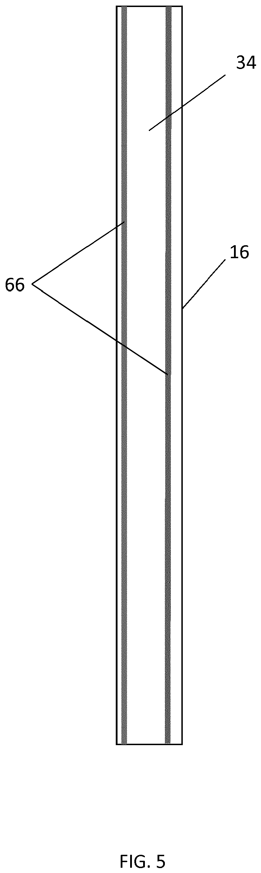

Referring again to FIG. 2, the back side 34 of the belt 16 includes one or more fluorescent portions 66 extending continuously along the belt 16 length. The fluorescent portions 66 may entirely cover the back side 34, or as shown in FIG. 5, may be one or more stripes extending along the belt 16 length. In some embodiments, the fluorescent portions 66 are one or more layers of fluorescent paint or other fluorescent coating applied to the jacket 28, while in other embodiments the fluorescent portion 66 are embedded into the jacket 28 material.

Referring again to FIG. 4, the light emitter 62 and the light receiver 64 are directed toward the belt 16, in particular toward the fluorescent portions 66, such that light 68 emitted by the light emitter 62 is reflected off of the fluorescent portions 66 to the light receiver 64. In operation, the light emission is continuous, and surface anomalies in the jacket 28 such as cracks, pits, foreign object damage result in discontinuity in the fluorescent portions 66. As such, discontinuous reception of the reflected light at the light receiver 64 is indicative of a surface anomaly in the jacket 28.

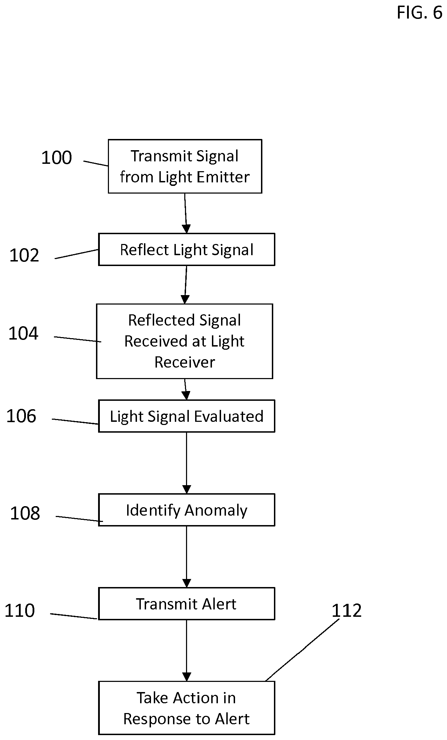

Referring to FIG. 6, a schematic illustration of a method of monitoring a belt 16 condition is shown. At block 100, a light signal is continuously transmitted from the light emitter 62 toward the fluorescent portions 66 of the belt 16. At block 102, the light signal is reflected from the fluorescent portions 66 toward the light receiver 64. At block 104, the light receiver 64 receives the reflected light signal and evaluates the light signal for continuity at block 106. At block 108, discontinuity in the light signal received at the light receiver 64 is determined by the light receiver 64 as a surface anomaly of the belt 16, for example, a crack, pitting, or foreign object damage. At block 110, the light receiver 64 transmits a signal, such as an alert or warning to an elevator control system 70. The control system 70 may take action at block 112 in response to the alert from the light receiver 64, such as contacting service technicians to perform a visual inspection of the belt 16 or stopping operation of the elevator system 10.

The system and method disclosed herein allow for continuous monitoring of the condition of the elevator belt 16, with a considerable savings in time and labor relative to a system which relies solely on manual visual inspection of the belt 16.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

It is intended that the present disclosure not be limited to the particular embodiment disclosed as the best mode contemplated for carrying out this present disclosure, but that the present disclosure will include all embodiments falling within the scope of the claims.

## Claims

1. A health monitoring system (60) for a tension member (16) of an elevator system (10), comprising:
one or more light emitters (62) configured to direct a light signal toward an elevator system tension member (16); and **characterized by**
one or more light receivers (64) configured to receive a reflected light signal from a fluorescent surface (66) of the elevator system tension member (16);
wherein a discontinuity in the reflected light signal received at the one or more light receivers (64) is indicative of an anomaly in the elevator tension member (16).

2. The health monitoring system (60) of claim 1, wherein the one or more light emitters (62) are disposed at one or more sheaves (18; 52) of the elevator system (10).

3. The health monitoring system (60) of claim 2, wherein the one or more sheaves (18; 52) is a traction sheave (52) of the elevator system (10).

4. The health monitoring system (60) of claim 1, 2 or 3, wherein the anomaly is one or more of one or more of cracks, pitting, excessive wear or foreign object damage.

5. The health monitoring system (60) of any preceding claim, wherein the one or more light receivers (62) are configured to transmit an alert to an elevator control system (70) when an anomaly in the elevator tension member (16) is detected.

6. The health monitoring system (60) on claim 5, wherein the elevator control system (70) is configured to take one or more actions in response to the alert.

7. The health monitoring system (60) of claim 6, wherein the elevator control system (70) stops operation of the elevator system (10) or notifies a technician to perform an inspection of the elevator tension member (16) in response to the alert.

8. An elevator system (10), comprising:
a hoistway (12);
an elevator car (14) movable along the hoistway (12);
a tension member (16) operably connected to the elevator car (14) to move the elevator car (14) along the hoistway (12); and
a health monitoring system (60) for the tension member (16), the health monitoring system (60) being according to any preceding claim.

9. The elevator system (10) of claim 8, wherein the fluorescent surface (66) is a layer of fluorescent paint applied to a jacket (28) of the elevator tension member (16).

10. A method of health monitoring of a tension member (16) of an elevator system (10), **characterised by**:
transmitting (100) a light signal toward a fluorescent surface (66) of an elevator tension member (16) from a light emitter (62); and
reflecting (102) the light signal from the fluorescent surface (66) toward a light receiver (64);
wherein a discontinuity in the reflected light signal received at the light receiver (64) is indicative of an anomaly in the elevator tension member (16).

11. The method of claim 10, wherein the anomaly is one or more of one or more of cracks, pitting, excessive wear or foreign object damage.

12. The method of claim 10 or 11, further comprising transmitting an alert (110) from the light receiver (64) to an elevator control system (70) when an anomaly in the elevator tension member (16) is detected.

13. The method of claim 10, 11 or 12, wherein the elevator control system (70) stops operation of the elevator system (10) or notifies a technician to perform an inspection of the elevator tension member (16) in response to the alert.

14. The method of any of claims 10 to 13, wherein the fluorescent surface (66) is a layer of fluorescent paint applied to a jacket (28) of the elevator tension member (16).

## Patentansprüche

1. Zustandsüberwachungssystem (60) für ein Zugglied (16) eines Aufzugssystems (10), das Folgendes umfasst:
einen oder mehrere Lichtemitter (62), die dazu konfiguriert sind, ein Lichtsignal in Richtung eines Aufzugssystem-Zugglieds (16) zu lenken; und **gekennzeichnet durch**
einen oder mehrere Lichtempfänger (64), die dazu konfiguriert sind, ein reflektiertes Lichtsignal von einer fluoreszierenden Oberfläche (66) des Aufzugssystem-Zugglieds (16) zu empfangen;
wobei eine Unterbrechung des reflektierten Lichtsignals, das an dem einen oder den mehreren Lichtempfängern (64) empfangen wird, auf eine Anomalie in dem Aufzugszugglied (16) hinweist.

2. Zustandsüberwachungssystem (60) nach Anspruch 1, wobei der eine oder die mehreren Lichtemitter (62) an einer oder mehreren Seilrollen (18; 52) des Aufzugssystems (10) angeordnet sind.

3. Zustandsüberwachungssystem (60) nach Anspruch 2, wobei es sich bei der einen oder den mehreren Seilrollen (18; 52) um eine Traktionsseilrolle (52) des Aufzugssystems (10) handelt.

4. Zustandsüberwachungssystem (60) nach Anspruch 1, 2 oder 3, wobei die Anomalie eines oder mehrere von Rissen, Lochfraß, übermäßigem Verschleiß oder Beschädigung durch Fremdkörper ist.

5. Zustandsüberwachungssystem (60) nach einem der vorstehenden Ansprüche, wobei der eine oder die mehreren Lichtempfänger (62) dazu konfiguriert sind, eine Warnung an ein Aufzugssteuersystem (70) zu übertragen, wenn eine Anomalie in dem Aufzugszugglied (16) nachgewiesen wird.

6. Zustandsüberwachungssystem (60) nach Anspruch 5, wobei das Aufzugssteuersystem (70) dazu konfiguriert ist, als Reaktion auf die Warnung eine oder mehrere Maßnahmen vorzunehmen.

7. Zustandsüberwachungssystem (60) nach Anspruch 6, wobei das Aufzugssteuersystem (70) als Reaktion auf die Warnung den Betrieb des Aufzugssystems (10) stoppt oder einen Techniker benachrichtigt, um eine Überprüfung des Aufzugszugglieds (16) durchzuführen.

8. Aufzugssystem (10), das Folgendes umfasst:
einen Aufzugsschacht (12);
eine Aufzugskabine (14), die entlang des Aufzugsschachts (12) bewegbar ist;
ein Zugglied (16), das mit der Aufzugskabine (14) wirkverbunden ist, um die Aufzugskabine (14) entlang des Aufzugsschachts (12) zu bewegen; und
ein Zustandsüberwachungssystem (60) für das Zugglied (16), wobei das Zustandsüberwachungssystem (60) gemäß einem der vorstehenden Ansprüche ausgebildet ist.

9. Aufzugssystem (10) nach Anspruch 8, wobei die fluoreszierende Oberfläche (66) eine Schicht aus fluoreszierender Farbe ist, die auf eine Ummantelung (28) des Aufzugszugglieds (16) aufgetragen ist.

10. Verfahren zum Überwachen des Zustands eines Zugglieds (16) eines Aufzugssystems (10), **gekennzeichnet durch**:
Übertragen (100) eines Lichtsignals in Richtung einer fluoreszierenden Oberfläche (66) eines Aufzugszugglieds (16) von einem Lichtemitter (62); und
Reflektieren (102) des Lichtsignals von der fluoreszierenden Oberfläche (66) in Richtung eines Lichtempfängers (64);
wobei eine Unterbrechung des reflektierten Lichtsignals, das an dem Lichtempfänger (64) empfangen wird, auf eine Anomalie in dem Aufzugszugglied (16) hinweist.

11. Verfahren nach Anspruch 10, wobei die Anomalie eines oder mehrere von Rissen, Lochfraß, übermäßigem Verschleiß oder Beschädigung durch Fremdkörper ist.

12. Verfahren nach Anspruch 10 oder 11, ferner umfassend Übertragen (110) einer Warnung von dem Lichtempfänger (64) an ein Aufzugssteuersystem (70), wenn eine Anomalie in dem Aufzugszugglied (16) nachgewiesen wird.

13. Verfahren nach Anspruch 10, 11 oder 12, wobei das Aufzugssteuersystem (70) als Reaktion auf die Warnung den Betrieb des Aufzugssystems (10) stoppt oder einen Techniker benachrichtigt, um eine Überprüfung des Aufzugszugglieds (16) durchzuführen.

14. Verfahren nach einem der Ansprüche 10 bis 13, wobei die fluoreszierende Oberfläche (66) eine Schicht aus fluoreszierender Farbe ist, die auf eine Ummantelung (28) des Aufzugszugglieds (16) aufgetragen ist.

## Revendications

1. Système de surveillance d'état (60) pour un élément de tension (16) d'un système d'ascenseur (10), comprenant :
un ou plusieurs émetteurs de lumière (62) configurés pour diriger un signal lumineux vers un élément de tension (16) de système d'ascenseur ; et **caractérisé par**
un ou plusieurs récepteurs de lumière (64) configurés pour recevoir un signal lumineux réfléchi à partir d'une surface fluorescente (66) de l'élément de tension (16) de système d'ascenseur ;
dans lequel une discontinuité dans le signal lumineux réfléchi reçu au niveau des un ou plusieurs récepteurs de lumière (64) indique une anomalie dans l'élément de tension (16) d'ascenseur.

2. Système de surveillance d'état (60) selon la revendication 1, dans lequel les un ou plusieurs émetteurs de lumière (62) sont disposés au niveau d'une ou de plusieurs poulies (18 ; 52) du système d'ascenseur (10).

3. Système de surveillance d'état (60) selon la revendication 2, dans lequel les une ou plusieurs poulies (18 ; 52) sont une poulie de traction (52) du système d'ascenseur (10).

4. Système de surveillance d'état (60) selon la revendication 1, 2 ou 3, dans lequel l'anomalie est un ou plusieurs éléments d'un ou de plusieurs éléments parmi des fissures, des piqûres, une usure excessive ou des dommages causés par un corps étranger.

5. Système de surveillance d'état (60) selon une quelconque revendication précédente, dans lequel les un ou plusieurs récepteurs de lumière (62) sont configurés pour transmettre une alerte à un système de commande d'ascenseur (70) lorsqu'une anomalie dans l'élément de tension (16) d'ascenseur est détectée.

6. Système de surveillance d'état (60) selon la revendication 5, dans lequel le système de commande d'ascenseur (70) est configuré pour effectuer une ou plusieurs actions en réponse à l'alerte.

7. Système de surveillance de d'état (60) selon la revendication 6, dans lequel le système de commande d'ascenseur (70) arrête le fonctionnement du système d'ascenseur (10) ou notifie à un technicien d'effectuer une inspection de l'élément de tension (16) d'ascenseur en réponse à l'alerte.

8. Système d'ascenseur (10), comprenant :
une cage d'ascenseur (12) ;
une cabine d'ascenseur (14) mobile le long de la cage d'ascenseur (12) ;
un élément de tension (16) relié fonctionnellement à la cabine d'ascenseur (14) pour déplacer la cabine d'ascenseur (14) le long de la cage d'ascenseur (12) ; et
un système de surveillance d'état (60) pour l'élément de tension (16), le système de surveillance d'état (60) étant selon une quelconque revendication précédente.

9. Système d'ascenseur (10) selon la revendication 8, dans lequel la surface fluorescente (66) est une couche de peinture fluorescente appliquée sur une gaine (28) de l'élément de tension (16) d'ascenseur.

10. Procédé de surveillance d'état d'un élément de tension (16) d'un système d'ascenseur (10), **caractérisé par** :
la transmission (100) d'un signal lumineux vers une surface fluorescente (66) d'un élément de tension (16) d'ascenseur à partir d'un émetteur de lumière (62) ; et
la réflexion (102) du signal lumineux à partir de la surface fluorescente (66) vers un récepteur de lumière (64) ;
dans lequel une discontinuité dans le signal lumineux réfléchi reçu au niveau du récepteur de lumière (64) est indicative d'une anomalie dans l'élément de tension (16) d'ascenseur.

11. Procédé selon la revendication 10, dans lequel l'anomalie est un ou plusieurs éléments d'un ou de plusieurs éléments parmi des fissures, des piqûres, une usure excessive ou des dommages causés par un corps étranger.

12. Procédé selon la revendication 10 ou 11, comprenant en outre la transmission d'une alerte (110) à partir du récepteur de lumière (64) à un système de commande d'ascenseur (70) lorsqu'une anomalie dans l'élément de tension (16) d'ascenseur est détectée.

13. Procédé selon la revendication 10, 11 ou 12, dans lequel le système de commande d'ascenseur (70) arrête le fonctionnement du système d'ascenseur (10) ou notifie à un technicien d'effectuer une inspection de l'élément de tension (16) d'ascenseur en réponse à l'alerte.

14. Procédé selon l'une quelconque des revendications 10 à 13, dans lequel la surface fluorescente (66) est une couche de peinture fluorescente appliquée sur une gaine (28) de l'élément de tension (16) d'ascenseur.
